# EUROPEAN PATENT APPLICATION

(11) **EP 1 978 705 A1**
(43) Date of publication of application: **08.10.2008**
(21) Application number: 07300929.2
(22) Date of filing: 05.04.2007
(51) Int. Cl.: H04L 29/06, H04Q 7/32

(54) **Method and device to inform of database update on a terminal system of an end-user**

(71) Applicant: GEMPLUS, 13420 Gémenos (FR)
(72) Inventor: Boutie, Cédric, 83170 Rougiers (FR); Collet, Hervé, 13380 Plan de Cuques (FR); Peix, Fabien, 83270 Saint Cyr sur Mer (FR)

(57) **Abstract**

The invention relates to a method and a device to inform of database update on a terminal system of an end-user.

This method for informing services (300, 400, 500, 600) available in a mobile system (100,200) of a database (800) update, relies on a software module (700) signaling database update to the plurality of services following an ordered list of the said services.

## Description

The invention relates to a method and a device to inform of database update on a terminal system of an end-user, in order to allow services stored into the terminal system to make sure they use the up to date content of the database. More particularly, the invention relates to a method implemented on a device, to provide an efficient way, being available for all applications stored into the said system, to be aware of any database update.

As an example, it concerns all applications embedded on a telecommunication smartcard interacting with a phonebook.

The objective is to guarantee to services they use the correct phonebook information shared across all applications implementing services stored on the personal token, this personal token being part of the mobile terminal system.

As such services are getting more and more numerous, and more and more elaborate, the phonebook being the central database for most of then, the problem of being activated at least every time an update is made to the phonebook can be crucial for application implementing such services.

Indeed, different kinds of update shall be managed:
■ "External" file update event registration and applet triggering order,
■ "Internal" file update event registration and applet triggering order,
■ Dynamic registration/deregistration for OTA applet management,
■ All services revolving around phonebook (search, sort...) .

Currently, as disclosed in 3GPP standard ETSI TS 102.241 v6.11.0, §6.2 Definition of events, the dedicated event EVENT_EXTERNAL_FILE_UPDATE is used in order to activated application that asked to, in case an access to such a specified file is made. It's functional for Input/Output access only, as an update made using end-user interface on the mobile terminal but not in case another application internally accesses the said dedicated file or when the dedicated file is updated OTA (over The Air).

The problem of being activated at least every time an update is made to the phonebook is then not solved by standardised implementations based on EVENT_EXTERNAL_FILE_UPDATE usage for as example internal update made by others applications stored into the personal token as well.

SIM Toolkit applications containing useful services provided by the operator are embedded inside the subscriber identity module. Therefore it can be cumbersome for the application writer to make sure the application will use an up to date phonebook content as he'll have to reread on regular basis the whole content of the said phonebook (an example of such service being a phonebook backup on an OTA server service). Or even more crucial, in some cases the application writer must make sure that the service he's developing will be called every time the phonebook is changed (such as contacts exchange service or internationalisation of phone numbers service).

It is thus desirable to provide a portable and user friendly way to facilitate database update detection on a terminal system of an end-user in order to be able for telecommunication operators and partners to propose integrated services based on phonebook usage.

This purpose is achieved by way of the invention as recited in the appended claims.

Other purposes, benefits and aspects of the invention will appear through the following description, which is made in reference to the appended figures, among which:

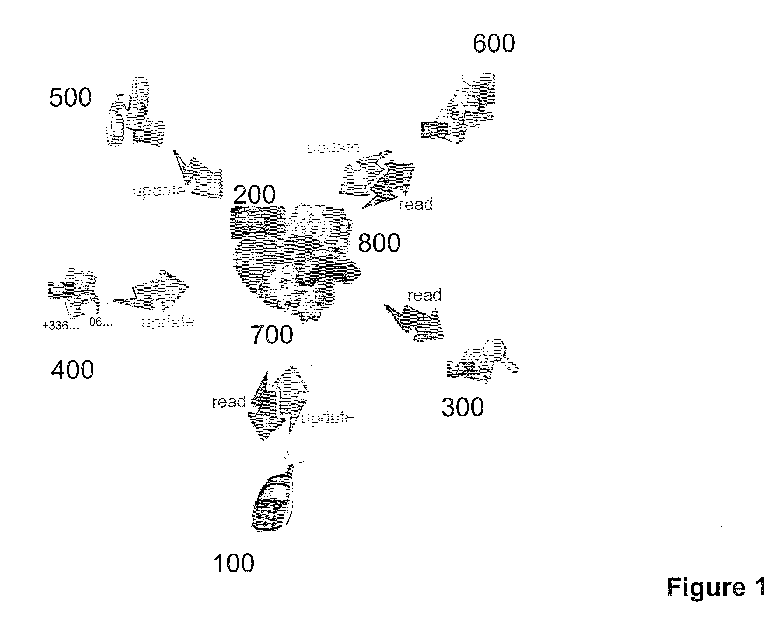

- figure 1 represents the way the phonebook is used by several services and consequently illustrates why any update into the said database must be made available to all interested services.

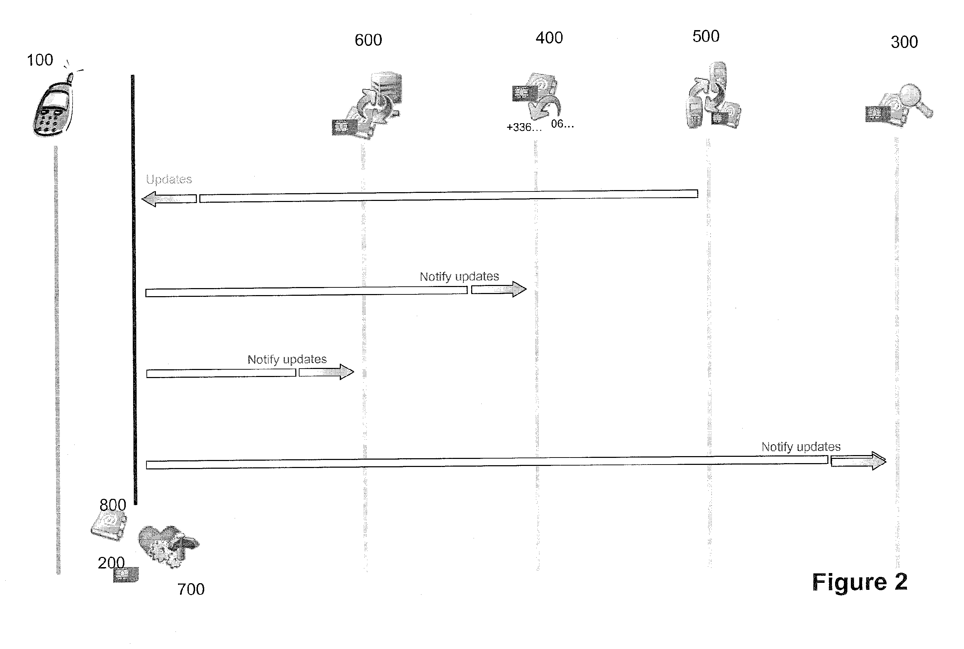

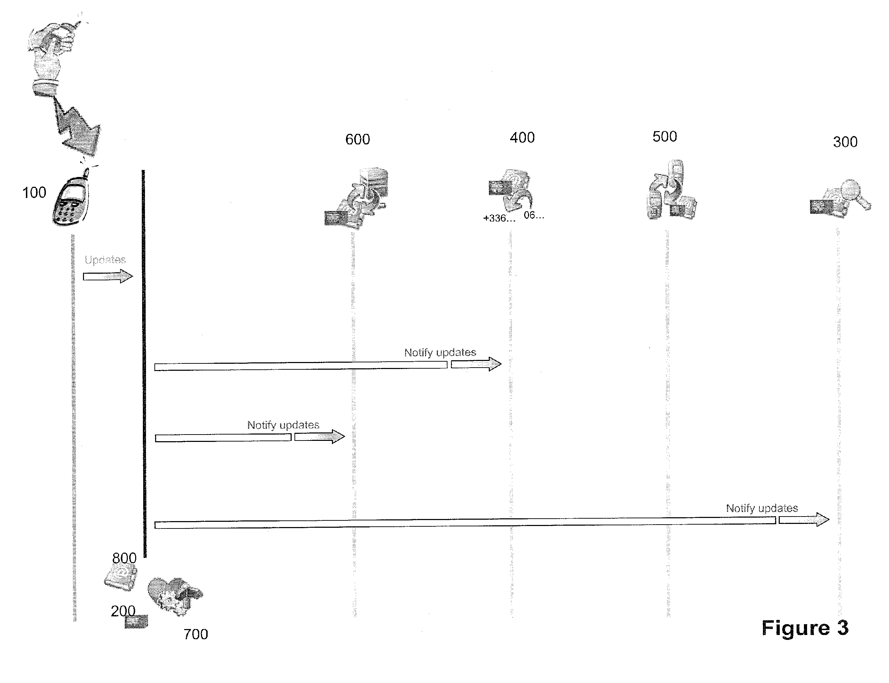

- figures 2 and 3 represent the different roles of the players and show the way the update of at least an item of the phonebook is detected and propagated to all concerned application(s) in case the update is made by an internal service (see figure 2) and in case the update is made using the MMI (Man to Machine Interface) of the terminal (see figure 3).

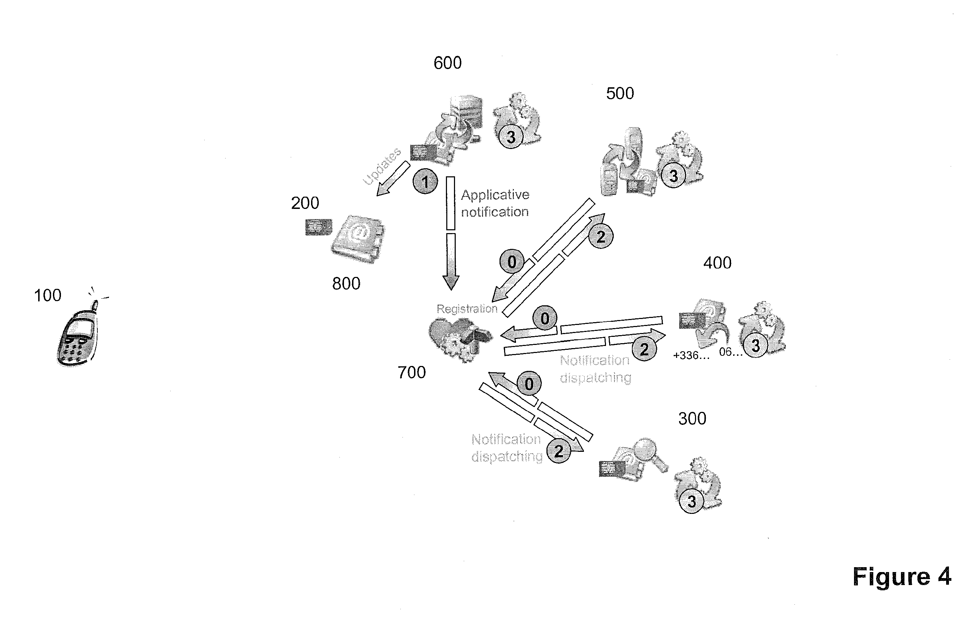

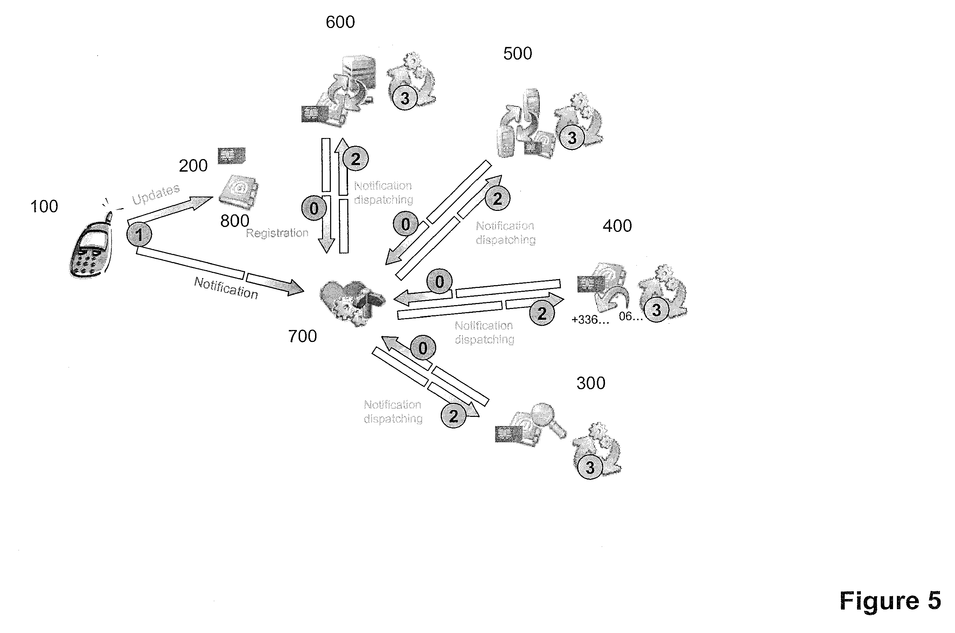

- Figures 4 and 5 represent respectively a flowchart showing a sequence of steps describing one embodiment of the disclosed invention, showing the way the update of at least an item of the phonebook is detected and propagated to all concerned application(s), in case the update is made by an internal service and in case the update is made using the terminal.

As disclosed in Figure 1, when the end-user, using his mobile terminal system made of a mobile terminal 100 and a personal token 200, makes a change in the phonebook 800, this change being an update, addition or deletion of an item of the database, all the concerned applications of services are activated (300, 400, 500 and 600) thanks to the usage of a dedicated software module 700 that centralizes all events happening on the phonebook 800 and dispatches them on concerned applications such as phonebook indexation 300, contact exchange 500, phonebook backup/restore 600 and international renumbering 400.

Optionally, the said module can as well centralize services revolving around phonebook (contact search, sort of contacts using preferred criteria ...) .

The invention involves as well a dedicated software module 700 to provide an efficient and reliable database update detection method being available for all the concerned applications, those applications being stored into the personal token itself 200 or even in the mobile device 100.

According to one aspect of the invention, this dedicated software module 700 is an applet stored into the personal token 200.

Hereafter, an embodiment of the invention will be described wherein the end-user is updating a contact mobile telephone number stored into the phonebook 800 of his mobile terminal 100, i.e. a handset, associated to a subscriber identity module 200, and connected via a mobile radio communication network such as GSM or 3G telecommunication network (not shown).

On the said subscriber identity module 200 (SIM), in a dedicated memory such as a ROM memory, flash memory or EEPROM memory, a dedicated application 700 is stored. The application can be installed into the memory of the card during personalization step, before putting it on the market or installed using post issuance infrastructure such as Over the Air (OTA) infrastructure or point of sale solution.

This dedicated application can as well be stored into the mobile terminal memory, in another embodiment.

Phonebook sharing examples can be a consequent set of applications revolving around a phonebook, such as 3G Phonebook backup/restore, International renumbering, Contacts exchange, Phonebook indexation, remote file management application as described into ETSI TS 102.226 and/or Dynamic menu SIM toolkit services.

Some of those applications use the phonebook content, and/or update it, when some other only access content of such database in a reading mode only.

Update can be addition, modification or deletion of one or several records of the database.

Database is any kind of data stored into the said terminal system 100 and 200, being stored into the mobile device itself 100 and/or into the personal token 200. A preferred example is the well known 2G or 3G phonebook 800 as standardized by ETSI, stored on a personal token 200 and available on the screen of mobile device 100 to the end-users. However, those skilled in the art should recognize that the method is applicable to handset with or without personal token but also to other types of mobile systems, including mobile devices, such as PDA (personal digital assistant), smartphone, operable either on the same network or different networks.

More particularly, for SIM Toolkit applications stored into the personal token 200, such application will register to the dedicated module 700 in order to make sure they will be called as soon as an update to the phonebook 800 will be made, whatever the update; allowing the end-user to use services based on phonebook being sure those services are using the very last version of the said phonebook.

This solution is based on the dedicated module 700 centralizing all those updates and propagating the update information to all concerned applications, following a predefined order.

If the telecommunication operator operating such services wants to make any change(s) in the phonebook using OTA solution, for example change the national prefix number, he'll have to make sure all the phonebook related services will then use such new prefix number(s). This can be done using the disclosed invention as the dedicated module 700 will detect such modification into the phonebook and then propagate the update to all the concerned applications.

As shown on figure 1, with the invention, on any phonebook modification, the dedicated software module 700 stored into the subscriber identity module 200 is activated, allowing all the concerned services to become aware in a reliable way that something changed into the phonebook. This signalling is done following a predefined order among all the subscribed services.

In figure 1, as soon as, as example the end-user changes a phone number of one of his contact into his 2G phonebook stored into the SIM card, or an internal service 300, 400, 500 or 600 makes any change into the phonebook, the software module 200 is activated and then dispatches the update signal to concerned services.

Figure 2 shows the main steps the dedicated software module 200 will follow in order to detect the update of an item of the phonebook and propagate it to all concerned application(s) in case the change in the phonebook is made by service 500.

Service contact exchange 500 notifies such a change to the software module 200 and then the said software module 200 notifies update to registered services such as phonebook indexation 300, phonebook backup/restore 600 and international renumbering 400, following the predefined signaling order.

Figure 3 shows the main steps the dedicated software module 200 will follow in order to detect the update of an item of the phonebook and propagate it to all concerned application(s) in case the change in the phonebook is made as example by the end-user using the mobile terminal 100.

Mobile terminal notifies such a change to the software module 700 using a dedicated event and then the said software module 700 notifies update to registered services such as phonebook indexation 300, phonebook backup/restore 600 and international renumbering 400.

In figure 4, the case where the change in the phonebook 800 is made by service 500 (see figure 2) is detailled:
- **Step 0: Registration phase:** services requiring notification on database modifications shall be registered to the dedicated software module 700 and the signaling order list made of all the subscribed services and ordered must be updated with this new registered service. This registration phase (step 0) is of course made only once per service.
- **Step 1: Update phase:** the service phonebook backup/restore 600 performs updates on the phonebook 800 and notifies the software module 700 of its modifications using a call to NotifyINCard function proposed by software module 700, with modified file identification reference and one or several modified records numbers.
- **Step 2: Notification phase:** software module 700 dispatches phonebook updates notifications to all registered services such as phonebook indexation 300, international renumbering 400 and contact exchange 500. This is made using a dedicated function notifyOUT using parameters previously provided in notifyIN. Such notification is made following the order defined into the signaling order list.
- **Step 3: Applicative processing:** Notified services can process internally.

It would be exactly the same steps of the process in case service international renumbering 400 had made the update into the database. The only difference is that in this case service international renumbering 400 is not notified and the order of signalling followed by the software module 700 is consequently different (phonebook indexation 300, and then contact exchange 500 in our example);

Of course, the service from with the update originates, is not notified as already be aware of such a change in the database 800.

In one preferred embodiment as well, a non registered service can use NotifyINCard to inform it made an update in the database 800 but in any case it will receive a notification as not being registered.

In figure 5, the case where the change in the phonebook is made using the terminal 100 (see figure 3 as well) is detailled:
- **Step 0: Registration phase:** services requiring notification on database modifications shall be registered to the dedicated software module 700 and the signaling order list must be updated in order to include all registered service. This registration phase (step 0) is of course made only once per service.
- **Step 1 : Update phase:** the terminal 100 performs updates on the phonebook and notifies the software module 700 of its modifications using EVENT_EXTERNAL_FILE_UPDATE event, the software module 700 being notified throws EVENT_EXTERNAL_FILE_UPDATE *ETSI* 102.241 standard event, the parameters being file identification reference and one or several modified records numbers.
- **Step 2: Notification phase:** software module 700 reformats received parameters and then dispatches phonebook updates notifications to all registered services such as phonebook indexation 300, international renumbering 400, phonebook backup/restore 600 and contact exchange 500. This is made using a dedicated function notifyOUT with the parameters previously provided in EVENT_EXTERNAL_FILE_UPDATE. Such notification is made following the order defined into the signaling order list.
- **Step 3: Applicative processing:** Notified services can process internally.

In one preferred embodiment, every application can select under which conditions it'll be activated in case an update is made to the phonebook. As an example, condition can be: "deletion only", "any change", "phone number change only" ....

In one other embodiment, all the applications stored into the personal token 200 are activated in case any update is made to the phonebook 800 in a default order following a list sent by the to telecommunication operator or build using the application ID of the services.

Referring to Figures 2 to 5, to get more in details, the present implementation is based on the usage of SIM toolkit standardized commands and events and JavaCard sharable interfaces.

The preferred implementation can in one embodiment rely on a dedicated module 700, being optionally part of Card Operating System, which manages in this case the detection and propagation of any update into the phonebook or any other file and/or database.

Advantageously, a classification of the services with the most important priority related to phonebook update to the one with the less priority is performed so that the most sensible application relating to phonebook update is activated first every time an update is detected and the other applications are notified in an order following a preferred sequence. This can be very important in case the behaviour of service N depends from results of services (n-1), (n-c) ; like a renumbering service should better be run before a backup service as an example.

The order the several services are activated depends of this pre registered order. A dedicated list implemented via, as example, a table or a file (not shown) stored into the mobile system (100,200) is indeed used by the software module 700. This list establishes the order to be followed by the said software module 700 when signalling an update on the database 800.

The dedicated module (not shown) implementing the disclosed invention is preferably stored on the personal token 200.

This personal token is, depending of the technology used by the telecommunication operator in charge of the used network, a subscriber Identity module (SIM), a USIM (UMTS Subscriber Identity Module) or an ISIM (IP multimedia Service Identity Module).

According to one embodiment, this subscriber identity module can be a piece of software, the dedicated said module being in this case also a piece of software.

According to one other embodiment, this dedicated module being a SIM toolkit application is stored in the subscriber identity module memory for implementing the above disclosed method. Such an application is also known as an applet, or more specifically a cardlet, when implemented on a Java^{™} card type of subscriber identity module. Hereafter, this application will be referred to as an agent application. The subscriber identity module processor executes this agent application.

Although the mobile terminal 100 and the personal token 200 are shown and described to be linked devices, it should not be construed to be limited as such. They can be as example two separate devices communicating using contactless channels such as infrared IrDA or ISO 14443.

Accordingly, these devices operate on networks including a public switched telephone network (PSTN), a mobile communication network, an Internet protocol (IP) network, etc. The communication session may be a voice or a data communication session. Examples of a data communication session include, but are not limited to, audio streaming, video streaming, video conferencing, Voice Over IP (VOIP) etc.

In a preferred embodiment, this standalone module 700 stored into the personal token 200 will be activated on the hardware or software reboot of the mobile device 100, in order to make sure that any phonebook update will be detected, whatever the time it happens.

There are several ways by which the said module can detect the phonebook update:
- For an update made in the database 800 from an internal service stored into the mobile system (100, 200), a NotifyINCard function is activated into the software module 700 by the internal service itself and
- for an update made in the database using an input from the mobile terminal 100, a NotifyINTerm function is activated into the software module 700, using the EVENT_EXTERNAL_FILE_UPDATE event for activating a NotifyINTerm function.

Some services can use this software module 700 due to mobile operator demand in a particular embodiment.

Other additional optional steps can be added in the disclosed method, such as, in one embodiment, another dedicated application can be available allowing the mobile operator or even the end-user to, after entering a correct private code or key, rearrange the priority order of the services activated on phonebook update detection in the signaling list.

These different steps include, but are not limited to, usage of usual man to machine interface as used onto mobile terminal screen.

This invention provides telecommunication operator a secure way to make sure their services being sensible to any phonebook or other file and/or database update.

This disclosed solution replaces hard-coded links between applications, meaning an applet can be removed and or added from/to a SIM, without impacting any of the other services, the mobile operator being sure any phonebook update will still be detected and propagated.

The disclosed solution is compliant with all smart cards compatible with current ETSI / 3GPP / GlobalPlatform standards, such as those used by SIMalliance organization like described in Interoperability Stepping Stones Release 6.

The invention can indeed be implemented on all the mobile systems available on the market in the same way, with the same end-user experience as it is a portable solution that can be used on every handsets, whatever its brand and model.

## Claims

1. A method for informing services (300, 400, 500, 600) available in a mobile system (100, 200) of a database (800) update, the mobile system pre-storing the database, method **characterized in that** it relies on a software module (700) signaling database update to the said plurality of services following an ordered list of the services.

2. The method according to claim 1, **characterized in that** the software module (700) takes into account new service's subscription for signaling database update and it redefines the ordered list of the services consequently.

3. The method according to claim 1 or 2, **characterized in that** the mobile system is constituted of at least a personal token (200) and a mobile terminal(100), the personal token pre-storing the database (800).

4. The method according to claim 2 or 3, **characterized in that** the personal token (200) is an UICC card.

5. The method according to any one of the claims from 2 to 4, **characterized in that** the services are stored into the personal token (200).

6. The method according to any one of the claims from 2 to 5, **characterized in that** the software module (700) is stored into the personal token (200).

7. The method according to any one of the claims from 1 to 6, **characterized in that** the database (800) is a phonebook.

8. The method according to any one of the claims from 1 to 7, **characterized in that** a service is a phonebook indexation service (300).

9. The method according to any one of the claims from 1 to 7, **characterized in that** a service is a phonebook backup/restore service (600).

10. The method according to any one of the claims from 1 to 7, **characterized in that** a service is an international renumbering service (400).

11. A mobile system comprising a mobile terminal (100) and a personal token (200), which mobile system stores and runs instructions for informing services (300, 400, 500, 600) available in the mobile system (100,200) of a database (800) update, the mobile system pre-storing the database and/or the service, **characterized in that** the instructions induce the terminal system into signaling database update to the said plurality of services following an ordered list of the services.

12. A personal token (200) for being associated to a terminal (100), the said personal token pre-storing a database (800) and services (300, 400, 500, 600) and being **characterized in that** it stores and runs instructions which induce the personal token into signaling database update to the said plurality of services following an ordered list of the services.
